(19) Europäisches Patentamt
European Patent Office
Office européen des brevets

(11) **EP 3 743 991 B1**

(12) **EUROPÄISCHE PATENTSCHRIFT**

(45) Veröffentlichungstag und Bekanntmachung des Hinweises auf die Patenterteilung:
**12.07.2023   Patentblatt 2023/28**

(21) Anmeldenummer: **19701645.4**

(22) Anmeldetag: **24.01.2019**

(51) Internationale Patentklassifikation (IPC):
*H02K 49/06* (2006.01)

(52) Gemeinsame Patentklassifikation (CPC):
**H02K 49/065;** H02K 2213/03

(86) Internationale Anmeldenummer:
**PCT/EP2019/051706**

(87) Internationale Veröffentlichungsnummer:
**WO 2019/145397 (01.08.2019 Gazette 2019/31)**

(54) **SKALIERBARE HYSTERESEKUPPLUNG**

SCALABLE HYSTERESIS COUPLING

COUPLAGE D'HYSTERESIS SCALABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2018   DE 102018101765**

(43) Veröffentlichungstag der Anmeldung:
**02.12.2020   Patentblatt 2020/49**

(73) Patentinhaber: **Stahl CraneSystems GmbH 74653 Künzelsau (DE)**

(72) Erfinder: **GOLDER, Markus 74653 Künzelsau (DE)**

(74) Vertreter: **Rüger Abel Patentanwälte PartGmbB Patentanwälte Webergasse 3 73728 Esslingen a. N. (DE)**

(56) Entgegenhaltungen:
**EP-A1- 1 843 454      EP-A1- 2 395 635
EP-A1- 2 502 875      EP-B1- 1 843 454
EP-B1- 2 502 875      WO-A1-2013/138971
CN-B- 102 611 280     DE-A1-102009 039 658
FR-A1- 2 937 390      JP-A- H1 127 928
JP-A- 2006 352 952    JP-A- 2017 192 175
US-A1- 2004 150 283   US-A1- 2012 156 071
US-A1- 2013 113 317   US-A1- 2015 027 828**

## Beschreibung

Die Erfindung betrifft eine Hysteresekupplung, insbesondere zur Übertragung von Drehmomenten in Maschinen und Anlagen, wie beispielsweise Kränen, Hebezeugen, Fahrantrieben, Werkzeugmaschinen und dergleichen.

Die Anordnung einer Hysteresekupplung im Antriebsstrang eines Hebezeuges ist zum Beispiel aus der US 3,573,518 bekannt. Die Hysteresekupplung weist zwei Rotoren auf, von denen einer mit der Motorwelle verbunden und von dieser angetrieben ist. Der andere Rotor der Hysteresekupplung ist mit der Eingangswelle eines zu dem Hebezeug gehörigen Getriebes verbunden. Der mit dem Motor verbundene Rotor weist Keramikmagnete auf, die auf einem zur Drehachse konzentrischen Kreis angeordnet sind und in Umfangsrichtung polarisiert sind. Zwischen den Magneten sind Polstücke angeordnet, die an der axialen Stirnseite des Rotors wechselnde Pole festlegen. Der zweite Rotor wird durch eine um die gleiche Drehachse drehbar gelagerte aus einem permanentmagnetischen Material, wie beispielsweise AlNiCo, ausgebildete Platte gebildet.

Der mit der Motorwelle verbundene, Permanentmagnete tragende Rotor ist deutlich voluminöser ausgebildet als der mit der Getriebeeingangswelle verbundene Rotor und weist deswegen ein höheres Trägheitsmoment als der getriebeseitige Rotor auf. Außerdem weist der motorseitige Rotor in Folge seiner Magnetanordnung unweigerlich ein relativ starkes radiales Streufeld auf, das teilweise durch ein sich um seinen Umfang erstreckendes Abstimmband geleitet wird, das somit einen magnetischen Kurzschluss für einen Teil des Streufeldes bildet. Der übrige Teil des radialen Streufelds durchsetzt das Kupplungsgehäuse und verursacht dort bei Drehung des Motors Wirbelströme. Dies bremst den Motor und trägt zur Verlustleistung bei.

Weiter ist aus der US 4,876,471 eine Hysteresekupplung bekannt, bei der ein erster mit Permanentmagneten versehener Rotor drehbar in dem im Wesentlichen zylindrischen Innenraum eines zweiten Rotors angeordnet ist, der an seinen beiden axialen Stirnseiten Hystereseplatten aufweist. Diese bestehen zu einem großen Teil ihres Volumens aus einem elektrisch isolierenden Bindematerial, das mit AlNiCo-Pulver gefüllt ist. Außenumfangsseitig ist der zweiten Rotor geschlossen.

Aus der DE 20 2008 003 913 U1 ist darüber hinaus eine Hysteresekupplung mit zwei Rotoren bekannt, die einen scheibenförmigen Spalt begrenzen. Während die eine Rotor Magnete trägt, ist der andere Rotor als Hysteresescheibe ausgebildet. Durch Verstellung des Abstands zwischen den beiden Rotoren lässt sich das übertragene Drehmoment justieren.

Außerdem ist aus der DE 10 2014 101 655 A1 ein Hebezeug mit Hysteresekupplung bekannt, bei der zwischen dem ersten und dem zweiten Rotor der Hysteresekupplung ein zylindrischer Luftspalt ausgebildet ist.

US 2013/0113317 A1 zeigt eine Hysteresekupplung mit einem ersten Rotor und einem zweiten Rotor. An dem ersten Rotor sind Permanentmagnete angeordnet. An dem zweiten Rotor ist ein Hysteresematerial in zwei konzentrischen geschlossenen Kreisen angeordnet.

Aus DE 10 2009 039 658 A1 ist eine Permanentmagnetkupplung für die synchrone Übertragung von Drehbewegungen bekannt, bei der beide Rotoren mit Permanentmagneten ausgestattet sind. Die Anzahl der Permanentmagnete an den beiden Rotoren ist gleich groß.

EP 2 395 635 A1 zeigt eine Permanentmagnetkupplung mit zwei Rotoren. Der eine Rotor trägt Permanentmagnete und der andere Rotor Permanentmagnete und/oder ein Hysteresematerial. Das Hysteresematerial kann einen ringsumlaufenden durchgehenden Ring bilden oder aus einer Vielzahl von Segmenten ringförmig zusammengesetzt sein.

CN 102611280 B und WO 2013/138971 A1 beschreiben magnetische Kupplungen zwischen einem Stator und einem Rotor, die ein Getriebe des Typs *"Harmonic Drive"* ohne mechanische Kopplung bilden soll. Am Stator und am Rotor sind jeweils Permanentmagnete angeordnet. Die Anzahl der Permanentmagnete an Rotor und Stator sind jeweils geradzahlig und verschieden groß. Dasselbe gilt auch für die Magnetkopplung zwischen einem Stator und einem Rotor gemäß.

Die aus dem Stand der Technik bekannten Hysteresekupplungen sind jeweils auf ihre geplante Baugröße hin konzipiert. Die jeweils vorgestellten Konzepte lassen jedoch eine Realisierung in abweichenden Baugrößen, wie sie durch Verwendung in anderen Zusammenhängen erforderlich werden können, nicht oder nur eingeschränkt zu.

Es ist Aufgabe der vorliegenden Erfindung, ein Konzept für eine Hysteresekupplung anzugeben, das den Aufbau solcher Kupplungen in einem weiten Last- und Einsatzbereich und in verschiedenen Baugrößen zulässt.

Diese Aufgabe wird mit einer Hysteresekupplung nach Anspruch 1 gelöst:

Die erfindungsgemäße Hysteresekupplung weist zwei Rotoren auf, die jeweils mit mehreren Permanentmagneten unterschiedlicher Koerzitivfeldstärke bestückt sind. Zwischen den beiden Rotoren ist ein kegelstumpfförmiger oder, wie es bevorzugt wird, ein zylindrischer Luftspalt ausgebildet. Damit wird ein bislang genutztes Bauprinzip verlassen, wonach nämlich der mit Hysteresematerial versehene zweite Rotor bislang möglichst durchgehend kontinuierlich ausgebildet war. Der Aufbau des zweiten Rotors mit mehreren einzelnen Permanentmagneten, die in Umfangsrichtung hintereinander angeordnet sind, ermöglicht sowohl den Aufbau besonders drehmomentstarker Kupplungen mit großem Durchmesser als auch den Aufbau kleinerer Kupplungen.

Der zweite Rotor weist in Schlupfrichtung, d.h. in Umfangsrichtung wenigstens zwei, vorzugsweise mehrere Permanentmagnete auf, die in einer zu einem Ring geschlossenen Reihe angeordnet sind. Damit entfallen Einschränkungen hinsichtlich der Baugröße, wie sie ansonsten infolge der beschränkten Fertigungsmöglichkeiten für ringförmige Permanentmagnete, insbesondere AlNiCo-Magnete gegeben sind. Durch die in Schlupfrichtung diskontinuierliche Reihe von Permanentmagneten des zweiten Rotors lassen sich Hysteresekupplungen beliebiger Baugröße realisieren. Vorzugsweise umfasst die Reihe der Permanentmagnete des zweiten Rotors mehrere, z.B. drei, fünf, sieben, acht oder eine andere Anzahl einzelner, vorzugsweise zylinderschalenförmiger Magnete. Zwischen den Magneten können in Axial- und Radialrichtung verlaufende Luftspalte bzw. Lücken ausgebildet sein. Die Luftspalte können Haltemittel für die Magnete enthalten.

Die Hysteresekupplung ist in Umfangsrichtung geschlossen, was Auswirkungen des Streufelds auf die Umgebung, insbesondere ein Kupplungsgehäuse mindert, womit wiederum hohe Drehzahlen ermöglicht werden. Außerdem bildet diese Bauform der Hysteresekupplung die Grundlage für eine kompakte Bauweise, bei der beide Rotoren ein niedriges Massenträgheitsmoment haben können. Insbesondere gelingt mit einer dadurch gegebenen, im Wesentlichen radialen Orientierung des Magnetfelds im Luftspalt die Erzielung einer hohen Flussdichte in demselben und somit die Erzielung eines hohen übertragbaren Drehmoments bei gleichzeitiger Unterdrückung schädlicher Streufelder. Mit der Erfindung ist eine Kupplung geschaffen, die bei geringer Baugröße ein hohes übertragbares Drehmoment liefert und zugleich ein niedriges Trägheitsmoment aufweist.

Vorzugsweise bestehen die Permanentmagnete beider Rotoren aus hartmagnetischen Materialien jedoch unterschiedlicher Koerzitivfeldstärke. Außerdem unterscheiden sich die Permanentmagnete der beiden Rotoren vorzugsweise durch das maximale Energieprodukt des jeweils verwendeten Materials. Während der erste Rotor vorzugsweise Permanentmagnete mit einem maximalen Energieprodukt aufweist, das größer als 100 kJ/m3, vorzugsweise größer als 200 kJ/m3 ist und bis über 500 kJ/m3 betragen kann, liegt das Energieprodukt des wenigstens einen Permanentmagneten des zweiten Rotors vorzugsweise bei einem Energieprodukt von über 50 kJ/m3. Beispielsweise können dazu die Permanentmagnete des ersten Rotors Seltenerdmagnete, wie zum Beispiel Neodym-Magnete sein, während die Permanentmagnete des zweiten Rotors AlNiCo-Magnete sein können. Während die Permanentmagnete des ersten Rotors in Betrieb ihre Magnetisierung immer behalten, werden die Permanentmagnete des zweiten Rotors in Betrieb, sobald die Kupplung schlüpft, fortwährend ummagnetisiert.

Die Permanentmagnete des ersten Rotors sind vorzugsweise, bezogen auf die Drehachse des Rotors, in Umfangsrichtung polarisiert, wobei einander benachbarte Magnete jeweils gegensinnig polarisiert sind. Die Permanentmagnete weisen dazu vorzugsweise eine ausgeprägte magnetische Anisotropie mit Magnetisierungsvorzugsrichtung in Umfangsrichtung auf. Zwischen den Magneten des ersten Rotors sind dann jeweils Polstücke angeordnet, die aus der in Umfangsrichtung gerichteten gegensinnigen Polarisierung benachbarter Magnete einen Radialfluss erzeugen.

Bevorzugterweise sind die Permanentmagnete des ersten Rotors als parallel zu der Drehachse orientierte Prismen ausgebildet, die einen Trapezquerschnitt aufweisen, wobei die Schmalseite des Trapezes radial außen und die Breitseite radial innen angeordnet ist. Die Permanentmagnete des ersten Rotors sind dabei vorzugsweise auf einem zu der Drehachse des Rotors konzentrischen Kreis angeordnet.

Vorzugsweise weist der zweite Rotor ebenfalls mehrere Permanentmagnete auf, die ebenfalls auf einem zu der Drehachse konzentrischen Kreis angeordnet sind. Die Permanentmagnete des zweiten Rotors sind dabei vorzugsweise zylinderschalenförmig ausgebildet und weisen jeweils eine Schaleninnenseite auf, die den Luftspalt radial nach außen begrenzt. Die Schaleninnenseite liegt vorzugsweise auf dem Mantel eines gedachten Zylinders, dessen Mittelachse mit der Drehachse des ersten Rotors und somit der Kupplung übereinstimmt.

Die radiale Dicke der Permanentmagnete des zweiten Rotors ist vorzugsweise so bemessen, dass der von den Permanentmagneten des ersten Rotors hervorgerufene magnetische Fluss an wenigstens einer Stelle des Permanentmagneten des zweiten Rotors Sättigungsinduktion hervorruft. Vorzugsweise ist die radiale Dicke der Permanentmagnete des zweiten Rotors so bemessen, dass der von den Permanentmagneten des ersten Rotors hervorgerufene magnetische Fluss auf einer Längsschnittfläche jedes Permanentmagneten des zweiten Rotors das Material des Permanentmagneten bis zur Sättigungsinduktion führt. Damit wird ein hohes übertragbares Drehmoment bei gleichzeitig niedrigem Gewicht bzw. Trägheitsmoment erreicht.

Die Anzahl der Permanentmagnete des zweiten Rotors ist von der Anzahl der Permanentmagnete des ersten Rotors verschieden. Die von den ersten Permanentmagneten festgelegten ersten Polwinkel ergeben sich aus 360°, geteilt durch die Anzahl erster Permanentmagnete. Die von den zweiten Permanentmagneten festgelegten zweiten Polwinkel ergeben sich aus 360°, geteilt durch die Anzahl zweiter Permanentmagnete. Die ersten und die zweiten Polwinkel haben vorzugsweise keinen gemeinsamen ganzzahligen Teiler. Damit sind die Anzahlen der Permanentmagnete der beiden Rotoren so festgelegt, dass eine besonders gleichmäßige Drehmomentübertragung auch im Schlupfzustand erreicht wird.

Vorzugsweise sind die Anzahl $M$ der Permanentmagnete des ersten Rotors und die Anzahl $S$ der Permanentmagnete des zweiten Rotors zueinander teilerfremd. Dies bedeutet: a) dass die Anzahl $M$ der Permanentmagnete des ersten Rotors und die Anzahl $S$ der Permanentmagnete des zweiten Rotors nicht durcheinander teilbar sind und b) dass es keine ganze Zahl gibt, durch die sich beide Anzahlen gleichermaßen teilen lassen. Mögliche Paarungen sind z.B. 20 erste, 9 zweite Permanentmagnete usw.

Die Permanentmagnete des zweiten Rotors bilden einen zu der Drehachse konzentrischen Kranz. Zwischen den einzelnen Permanentmagneten des zweiten Rotors sind einheitliche Lücken ausgebildet, die vorzugsweise parallel zu der Drehachse in Axialrichtung verlaufend orientiert sind. Die Lücken sind in Umfangsrichtung gemessen vorzugsweise schmaler als die am Luftspalt in Umfangsrichtung gemessene jeweilige Breite der Polstücke. Vorzugsweise sind die Permanentmagnete des zweiten Rotors in einem geblechten Halter gefasst, dessen Einzelbleche in die Lücken greifende Nasen zur formschlüssigen Lagerung der Permanentmagnete aufweisen können. Die Einzelbleche sind vorzugsweise aus einem unmagnetischen oder diamagnetischen, vorzugsweise gut wärmeleitenden Metall ausgebildet, wie z.B. Aluminium, oder dergleichen. Alternativ kann der Halter aus einem Kunststoff oder anderen elektrisch und magnetisch nicht leitenden Material gefertigt sein. Durch die Ausbildung des Halters in Form eines Stapels von Einzelblechen oder durch die Ausbildung aus elektrisch und magnetisch nicht leitendem Material werden Wirbelstromverluste minimiert und eine Schlupfkennlinie mit einem Anstieg erhalten, der von der elektrischen Leitfähigkeit der Permanentmagnete des zweiten Rotors festgelegt wird.

Die Permanentmagnete des zweiten Rotors haben vorzugsweise eine axiale Abmessung, die mit der Axialabmessung der Polstücke übereinstimmt. Damit ist an jeder Stelle des Umfangs des zweiten Rotors immer nur höchstens ein Permanentmagnet anzutreffen. Es ist aber alternativ auch möglich, den zweiten Rotor mit zwei oder mehreren Gruppen von Permanentmagneten auszubilden, nämlich einer ersten Gruppe, die auf einem ersten zu der Drehachse konzentrischen Kranz angeordnet ist, und einer zweiten Gruppe, die auf einem zweiten zu der Drehachse konzentrischen Kranz angeordnet ist. Gegebenenfalls können weitere Gruppen von Permanentmagneten entsprechend vorgesehen sein. Die Permanentmagnete der beiden oder mehreren Gruppen können axial aneinander anliegend angeordnet sein. Es kann zwischen axial einander benachbarten Permanentmagneten der beiden Gruppen auch eine elektrisch isolierende Zwischenlage vorgesehen sein, was Wirbelströme reduziert. Die axial einander benachbarten Magnete der beiden Gruppen können miteinander fluchtend angeordnet oder winkelmäßig gegeneinander versetzt angeordnet sein, so dass ein Permanentmagnet der einen Gruppe eine Lücke zwischen in Umfangsrichtung benachbarten Permanentmagneten der anderen Gruppe überdeckt. Mit einer solchen Bauform lassen sich besonders flache Drehmomentübertragungskennlinien erreichen, bei denen die Größe des übertragenen Drehmoments mit steigendem Schlupf nur wenig zunimmt.

Ein glatter, rastmomentfreier oder zumindest rastmomentarmer Drehmomentverlauf wird erfindungsgemäß dadurch erreicht, dass die Anzahl M der Permanentmagnete des ersten Rotors und die Anzahl S von Permanentmagneten des zweiten Rotors mit Rücksicht aufeinander festgelegt unter Einhaltung bestimmter Bedingungen festgelegt sind. Die beiden Anzahlen M und S sind entsprechend mindestens die nachfolgend genannte Bedingung b) festgelegt, vorzugsweise erfüllen sie beide Bedingungen:

a) Die beiden Anzahlen M und S sind teilerfremd, das heißt, die Anzahlen M und S haben keinen gemeinsamen ganzzahligen Teiler hierdurch wird ein rastmomentarmer Drehmomentverlauf erreicht;
b) Das Produkt beiden Anzahlen M und S, geteilt durch 180, ist eine ganzzahlige Potenz der Zahl Zwei $(M*S/180=2^N \ [N=0, 1, 2, 3 ...])$ hierdurch wird ein rastmomentfreier Drehmomentverlauf erreicht.

Diese Bedingungen gelten zumindest für M kleiner oder gleich 160 und S kleiner oder gleich 45

Beispiele für geeignete Paare von Anzahlen M,S sind: 20, 9; 36, 5; 40, 9; 72, 5; 80,9.

In der Zeichnung sind Ausführungsbeispiele der Erfindung veranschaulicht. Es zeigen:

Figur 1 eine erfindungsgemäße Hysteresekupplung, in schematisierter Seitenansicht,
Figur 2 die Hysteresekupplung nach Figur 1, in Querschnittsdarstellung, geschnitten entlang der Linie II-II in Figur 1,
Figur 3 einen Permanentmagneten des zweiten Rotors, in perspektivischer Darstellung,
Figur 4 B-H-Diagramme der verwendeten Magnetmaterialien,
Figur 5 eine Abwicklung einer Innenansicht des äußeren Rotors der Hysteresekupplung in einer ersten Ausführungsform,
Figur 6 eine Abwicklung einer Innenansicht des äußeren Rotors der Hysteresekupplung in einer zweiten Ausführungsform.

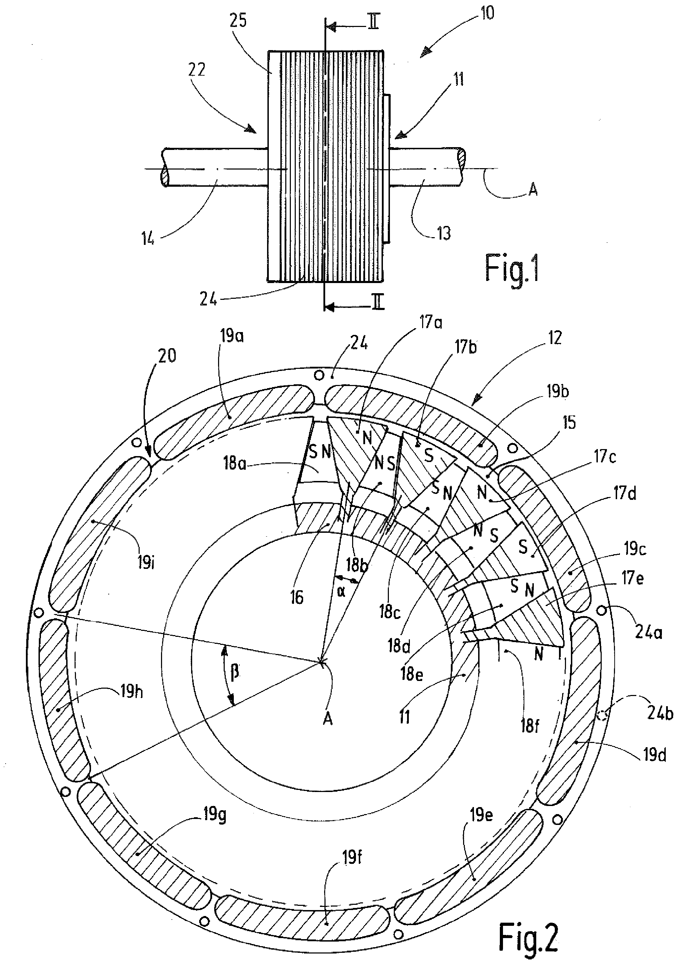

In Figur 1 ist eine Hysteresekupplung 10 veranschaulicht, die einen ersten Rotor 11 und einen zweiten Rotor 12 aufweist, die jeweils mit treibenden oder angetriebenen Wellen 13, 14 verbunden sind oder verbunden werden können. Die beiden Rotoren 11, 12 sind in ihrem Aufbau insbesondere aus der in Figur 2 angegebenen Querschnittsdarstellung ersichtlich, die leicht schematisiert den in Figur 1 angegebenen Schnitt II-II wiedergibt. Zwischen den beiden Rotoren 11, 12 ist ein ringförmiger im Wesentlichen zylindrischer Luftspalt 15 ausgebildet, der von nicht dargestellten zwischen den beiden Rotoren 11, 12 wirksamen Magnetflusslinien im Wesentlichen radial durchsetzt ist.

Der erste Rotor 11 weist eine nichtmagnetische Nabe 16 auf, die beispielsweise aus Aluminium, einem geeigneten Kunststoff oder einem sonstigen diamagnetischen oder nichtmagnetischen Materials ausgebildet ist. Außerdem können an der Nabe 16 nicht weiter veranschaulichte Mittel zur Verbindung mit der Welle 13 vorgesehen sein. Alternativ ist eine nahtlos einstückige Ausbildung der Nabe 16 mit der Welle 13 möglich.

Radial von der Nabe 16 abstehend ist eine gerade Anzahl von Polstücken 17 vorgesehen, deren Bezugszeichen 17 zur bedarfsweisen Unterscheidung in Figur 2 jeweils mit einem Buchstabenindex a bis e versehen sind. Eine nachfolgende Bezugnahme auf ein Polstück 17 ohne Buchstabenindex gilt entsprechend im Singular wie auch im Plural für alle Polstücke gleichermaßen. Die Polstücke 17 sind an ihrem Außenumfang dem Mantel eines gedachten Zylinders folgend ausgebildet. An ihrer radial innen liegenden Seite sind sie in oder an der Nabe 16 verankert. Dazu kann eine geeignete Formschlussverbindung gegebenenfalls unterstützt durch Reib- und/oder Stoffschluss genutzt werden. Jedes Polstück 17 ist im Wesentlichen prismatisch keilförmig ausgebildet, wobei die nahezu trapezförmigen Stirnflächen jedes Polstücks axial orientiert sind.

Zwischen einander benachbarten Polstücken 17a, 17b; 17b, 17c usw., sind sich in Axialrichtung erstreckende im Querschnitt trapez- oder keilförmige Zwischenräume ausgebildet, in denen Permanentmagnete 18 angeordnet sind. In Figur 2 sind deren Bezugszeichen zur bedarfsweisen Unterscheidung jeweils mit einem Buchstabenindex a bis f versehen. Eine nachfolgende Bezugnahme auf einen Permanentmagneten 18 ohne Buchstabenindex gilt entsprechend für alle Permanentmagnete. Die Permanentmagnete 18 weisen einen an die Zwischenräume zwischen den Polstücken 17 angepassten trapezförmigen Querschnitt auf und sind in diese Zwischenräume eingepasst. Die Permanentmagnete 18 bestehen vorzugsweise aus einem hartmagnetischen Magnetmaterial mit einem Energieprodukt größer als 100 kJ/m3 vorzugsweise größer als 200 kJ/m3 und einer Koerzitivfeldstärke deutlich größer 1000 kA/m. Zum Beispiel sind Permanentmagnete 18 des ersten Rotors Seltenerdmagnete, bestehend aus wenigstens einem Element aus der Gruppe Eisen, Kobalt und Nickel und außerdem wenigstens einem Seltenerdmetall aus der Gruppe Neodym, Samarium, Praseodym, Dysprosium, Terbium, Gadolinium und Yttrium. Vorzugsweise handelt es sich bei dem Material der ersten Magnete 18 um eine Neodym-Eisen-Bor-Legierung insbesondere Nd2Fe14B. Die magnetische Vorzugsrichtung der Magnete 18 ist vorzugsweise in Umfangsrichtung gerichtet, und somit im Wesentlichen parallel zu der schmalen, an den Luftspalt grenzenden Fläche sowie auch zu der breiteren zur Nabe 16 hin orientierten Fläche. Die aufmagnetisierten Permanentmagnete 18 liegen mit ihren eben ausgebildeten Flanken an den Flachseiten der Polstücke 17 an und sind dort klemmend und gegebenenfalls durch Klebstoff unterstützt gehalten. Jeweils zwei an ein Polstück 17 anliegende Magnete 18 sind dabei gegensinnig so polarisiert, dass an den Flanken (Flachseiten) des jeweiligen Polstücks gleichnamige Magnetpole anliegen.

Dazu sind benachbarte Magnete 18 jeweils gegensinnig polarisiert. Infolgedessen bilden benachbarte Polstücke 17 an ihren Außenumfangsflächen abwechselnd einen Nordpol und einen Südpol aus wie in Figur 2 schematisch angedeutet ist.

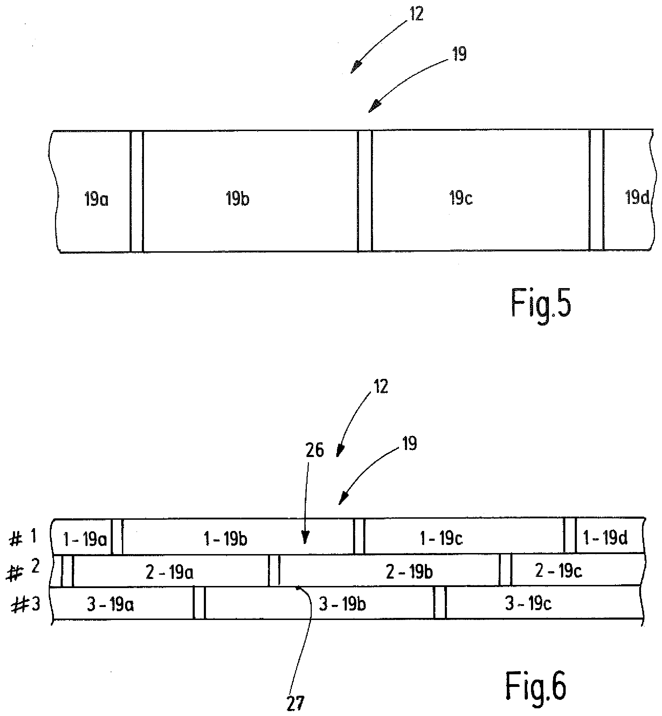

Der zweite Rotor 12 weist mindestens eine Gruppe von Permanentmagneten 19 auf, deren Bezugszeichen 19 zur Ermöglichung einer unterscheidenden Bezugnahme mit Buchstabenindex a bis i versehen sind. Eine nachfolgende Bezugnahme auf einen Permanentmagneten 19 ohne Buchstabenindex gilt entsprechend für alle Permanentmagnete 19. Die Anzahl der zu der Gruppe gehörigen Permanentmagnete 19 ist vorzugsweise größer als Zwei. In Figur 5 ist ein Ausschnitt aus einer Abwicklung der Innenansicht des Rotors 12 mit Blickrichtung radial nach außen dargestellt.

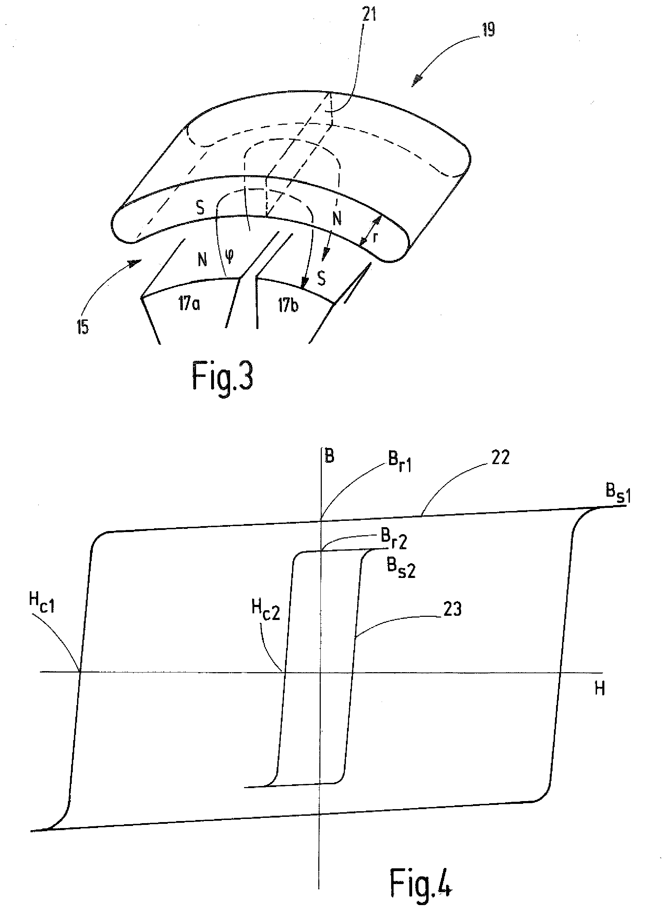

Die Permanentmagnete 19 des zweiten Rotors 12 grenzen mit ihrer Innenseite an den Luftspalt 15. Die Innenseite des jeweiligen Permanentmagnets 19 ist dabei einem Kreisbogen folgend gekrümmt, so dass der Permanentmagnet 19 letztendlich eine Zylinderschale bildet. In Radialrichtung weist der Permanentmagnet 19, abgesehen von seinen vorzugsweise gerundeten Enden, eine im Wesentlichen einheitliche Dicke auf. Der Permanentmagnet 19 kann an seinen Enden abgerundet oder auch durch eine ebene Stirnfläche abgeschlossen sein. In Figur 3 ist der Permanentmagnet 19 zur besseren Veranschaulichung stellvertretend für alle Permanentmagnete 19a bis 19i ohne Buchstabenindex mit leicht übertriebener Krümmung dargestellt.

Die Permanentmagnete 19a bis 19i bilden einen zu der Drehachse Ax konzentrischen Kranz mit geringen sich in Axial- und Radialrichtung erstreckenden Spalten 20. Diese Spalten 20 sind vorzugsweise nicht größer als die Abstände zwischen benachbarten Polstücken und jedenfalls enger als die in Umfangsrichtung zu messende Breite eines Polstücks 17. Die Drehachse Ax ist die gemeinsame Drehachse beider Rotoren 11, 12 und somit zugleich die Drehachse der Hysteresekupplung 10.

Infolge der geraden Anzahl von entlang des Umfangs in einer Reihe angeordneten Polstücken 17 ergibt sich eine gerade Anzahl M erster Magnete 18 (beispielsweise 20 Magnete 18). Die Anzahl S der zweiten, entlang des Umfangs in einer Reihe angeordneten Magnete 19 ist vorzugsweise so bemessen, dass die Anzahl M der ersten Magnete 18 und die Anzahl S der zweiten Magnete 19 zu unterschiedlichen Polwinkeln führen. Dies bedeutet, dass die Anzahl M der Permanentmagnete 18 des ersten Rotors 11 und die Anzahl S der Permanentmagnete 19 des zweiten Rotors 12 jeweils so festgelegt ist, dass 360°, jeweils geteilt durch die beiden Anzahlen M und S, verschiedene, vorzugsweise teilerfremde Polwinkel $\alpha$, $\beta$ ergibt. Die Polwinkel $\alpha$, $\beta$ weisen keinen gemeinsamen ganzzahligen Teiler auf. Außerdem sind die zweiten Magnete 19 in Umfangsrichtung vorzugsweise so lang, dass sie wenigstens zwei Polstücke 17 übergreifen, wie in Figur 2 anhand der Polstücke 17a, 17b und des Magneten 19b zu erkennen ist.

Es gilt außerdem wenigstens die nachfolgende Bedingung b) für die Anzahlen M und S:

a) Die beiden Anzahlen M und S sind teilerfremd, das heißt, es die Anzahlen M und S haben keinen gemeinsamen ganzzahligen Teiler hierdurch wird ein rastmomentarmer Drehmomentverlauf erreicht;

b) Das Produkt beiden Anzahlen M und S, geteilt durch 180, ist eine Potenz der Zahl Zwei, d.h.:

$$M * S / 180 = 2^N$$

wobei N Ganze Zahl, vorzugsweise eine Natürliche Zahl ist [N=0,1,2,3...] hierdurch wird ein rastmomentfreier Drehmomentverlauf erreicht.

Beispiele für geeignete Paare von Anzahlen M,S sind: 20,9; 36,5; 40,9; 72,5; 80,9.

Die Axialdimension der Polstücke 17 stimmt vorzugsweise im Wesentlichen mit der axialen Erstreckung der Permanentmagnete 19 überein. Dadurch nimmt ein Permanentmagnet 19 den gesamten, von einem Polstück 17 ausgehenden magnetischen Fluss φ auf.

Die radiale Dicke der Permanentmagnete 19 ist vorzugsweise so bemessen, dass eine sich zugleich in Längsrichtung und in Radialrichtung erstreckende gedachte Längsschnittfläche 21 durch den Magneten 19 einen solchen Flächeninhalt aufweist, dass das Magnetmaterial des Permanentmagneten 19 an wenigstens einer Stelle seine Sättigungsinduktion BS2 erreicht. Es wird dazu ergänzend auf Figur 4 Bezug genommen, in der die Kurve 22 die B-H-Kennlinie eines ersten Permanentmagneten 18 aus Neodym-Eisen-Bor-Legierung veranschaulicht, während die zweite Kurve 23 die B-H-Kennlinie des zweiten, aus einer Aluminium-Nickel-Kobalt-Legierung bestehenden Magneten 19 veranschaulicht. Die radiale Dicke des zweiten Magneten 19 ist so groß, dass der Flächeninhalt der Fläche 21 multipliziert mit der Sättigungsinduktion Bs2 einen Magnetfluss φ ergibt, der mit demjenigen Fluss φ übereinstimmt, der von benachbarten Polstücken (zum Beispiel 17a und 17b) durch den zweiten Magneten 19 geschickt wird.

Ersichtlicherweise bestehen die ersten Magnete 18 aus einem Material, dessen Koerzitivfeldstärke HC1 größer ist als die Koerzitivfeldstärke HC2 des Materials der zweiten Magnete 19. Außerdem ist vorzugsweise die Remanenzinduktion Br1 der ersten Magnete 18 größer als die Remanenzinduktion Br2 der zweiten Magnete 19. Gleiches gilt für die Sättigungsinduktion Bs1 und Bs2. Das Gesamtvolumen der ersten Magnete 18 kann gleich oder geringer sein als das Gesamtvolumen der zweiten Magnete 19. Das Gesamtvolumen der ersten Magnete ist die Summe der Volumina aller ersten Magnete 18. Das Gesamtvolumen der zweiten Magnete 19 ist die Summe aller Einzelvolumina der zweiten Magnete 19. Das Magnetmaterial der ersten Permanentmagnete 18 weist ein Energieprodukt auf, das vorzugsweise fünfmal bis zehnmal so groß ist, wie das Energieprodukt des Magnetmaterials der zweiten Permanentmagnete 19.

Die zweiten Permanentmagnete 19 sind in einem Halter 24 untergebracht, der sich in die Lücken 20 erstreckende Stege aufweist. Vorzugsweise ist der Halter 24 geblecht, d.h. durch einen Stapel deckungsgleich übereinander gefügter einzelner Blechzuschnitte gebildet, die durch nicht weiter veranschaulichte Mittel, wie Zuganker und dergleichen, zu einem festen Paket verspannt sind. Es sind dazu in den Blechzuschnitten Löcher 24a, 24b vorgesehen, die zur Aufnahme entsprechender Schrauben oder Zuganker dienen. Alternativ oder ergänzend können die einzelnen Halterbleche untereinander verklebt sein. Der Halter 24 ist außerdem mit einer Stirnplatte 25 verbunden, die ihrerseits mit der Welle 14 verbunden oder verbindbar ist. Die Stirnplatte 25 und die Welle 14 können auch einstückig miteinander verbunden sein. Halter 24, Stirnplatte 25 und Welle 14 können ebenfalls einstückig miteinander verbunden, z.B. als Spritzgusskomplettteil ausgebildet sein.

Die insoweit beschriebene Hysteresekupplung 10 arbeitet wie folgt:
Eine der Wellen 13, 14 wird mit einem antreibenden Drehmoment beaufschlagt und überträgt durch Magnetwirkung zwischen den Rotoren 11, 12 das Drehmoment auf die jeweils andere Welle. Nachfolgend wird davon ausgegangen, dass die Welle 13 als Eingangswelle drehend angetrieben ist. Damit erzeugt der drehende erste Rotor 11 ein im vorliegenden Ausführungsbeispiel 10-poliges magnetische Drehfeld, das die zweiten Permanentmagnete 19 durchsetzt. Dies ist im Hinblick auf die Polstücke 17a, 17b aus der skizzenhaften Darstellung der Figur 3 ersichtlich. Von dem Polstück 17a, das als Nordpol polarisiert ist, geht ein magnetischer Fluss φ aus, der über die gewölbte, an den Luftspalt 15 grenzende Innenseite in den Permanentmagneten 19 eintritt, dort in Umfangsrichtung umgelenkt wird, um die Längsschnittfläche 21 etwa rechtwinklig zu durchqueren, wonach der Fluss wiederum durch die dem Luftspalt 15 zugewandte Innenfläche austritt und das Polstück 17b erreicht. Durch das Zusammenspiel zwischen der Stärke des Flusses φ und der Größe der Längsschnittfläche 21 wird wenigstens an einer Stelle dieser Längsschnittfläche 21 die Sättigungsinduktion Bs2 des Magnetmaterials des zweiten Magneten 19 erreicht. Die Längsschnittfläche 21 ist dabei so groß bemessen, dass die Sättigungsinduktion BS2 an möglichst keiner Stelle überschritten, jedenfalls aber nicht auf ganzer Fläche überschritten wird, um einen Streufluss zu vermeiden oder zu minimieren, der sich in die radiale Umgebung der Hysteresekupplung erstreckt. Außerdem erreicht so das übertragbare Drehmoment sein Maximum.

Ist die Längsschnittfläche 21 hingegen so groß, dass an keiner Stelle der Längsschnittfläche 21 die Sättigungsinduktion BS2 erreicht wird, wird die in Figur 4 wiedergegebene Kurve 23 nicht mehr voll ausgesteuert und das übertragbare Drehmoment erreicht ebenfalls nicht seinen optimalen Wert.

Wird zur Beschreibung des Betriebs der Hysteresekupplung 10 zunächst angenommen, dass die Welle 14 drehmomentfrei, der Rotor 13 jedoch drehend angetrieben ist, laufen beide Rotoren 11, 12 synchron. Dies bleibt auch so, solange an der Welle 14 lediglich Drehmomente abgenommen werden, die unterhalb einer Schlupfgrenze liegen. Die Schlupfgrenze kommt zustande, indem durch den von den Permanentmagneten 18 angetriebenen Magnetfluss φ an der Innenseite der Permanentmagnete 19 Magnetpole induziert werden, deren Verschiebung erst ab einer definierten Mindestkraft möglich ist. Bei zunehmender Drehmomentbelastung der Hysteresekupplung tritt zunächst eine Winkelverdrehung zwischen den beiden Rotoren 11, 12 auf, im Rahmen derer der induzierte Südpol und der induzierte Nordpol des zweiten Permanentmagneten 19 gegen den Nordpol und den Südpol der Polstücke 17a, 17b etwas verschoben wird. Die induzierten Pole des zweiten Magneten 19 beruhen auf der Aufmagnetisierung des Magnetmaterials des Permanentmagneten 19 möglichst bis zur Sättigungsinduktion Bs2.

Durch die mit zunehmendem Drehmoment auch zunehmende Polverschiebung wird zunächst Drehmoment noch schlupffrei übertragen, bis das Magnetmaterial der zweiten Permanentmagnete 19 die Koerzitivfeldstärke Hc2 erreicht und überschreitet. In diesem Fall beginnen die induzierten Pole auf dem Kranz der zweiten Magnete 19 in Umfangsrichtung zu wandern, womit das zwischen der Welle 13 und der Welle 14 übertragene Drehmoment seine Grenze findet und von nun an lediglich noch durch in den zweiten Magneten 19 induzierte Wirbelströme ansteigt.

Bei der Hysteresekupplung 10 kann gleichermaßen die Welle 14 als Eingangswelle dienen, von der ausgehend Drehmoment auf die Welle 13 übertragen wird. Der Drehmomentfluss ist bidirektional.

Während bei der vorstehend beschriebenen Ausführungsform der Hysteresekupplung 10 der Rotor 12 eine einzige Gruppe zweiter Permanentmagnete 19 aufweist, die einen konzentrisch zu der Drehachse Ax orientierten Kranz bilden und die den ersten Rotor 11 bzw. dessen Polstücke 17 in Axialrichtung ganz überdecken, kann der zweite Rotor 12, wie in Figur 6 veranschaulicht, auch zwei oder mehrere Gruppen zweiter Permanentmagnete 19 aufweisen. In Figur 6 sind eine erste Gruppe #1 von Permanentmagneten 1-19, eine zweite Gruppe #2 von Permanentmagneten 2-19 und eine dritte Gruppe #3 von Permanentmagneten 3-19 veranschaulicht. Die Permanentmagnete 1-19 der ersten Gruppe #1 (dargestellt sind 1-19a bis 1-19d) bilden einen ersten Kranz, der konzentrisch zu der Drehachse Ax orientiert ist. Entsprechend bilden die Permanentmagnete 2-19 der zweiten Gruppe #2 einen zweiten zu der Drehachse Ax konzentrischen Kranz und die Permanentmagnete 3-19 der dritten Gruppe #3 einen dritten zu der Drehachse Ax konzentrischen Kranz. Die Permanentmagnete 19 der drei Gruppen #1, #2 und #3 können, wie es Figur 6 nahelegt, gegeneinander einen Winkelversatz aufweisen, wodurch axial einander benachbarte Permanentmagnete 19 jeweils die zwischen in Umfangsrichtung benachbarten Permanentmagneten 19 gebildete Lücken überdecken. Zwischen den Permanentmagneten 1-19 der ersten Gruppe #1 und den Permanentmagneten 2-19 der zweiten Gruppe #2 kann ein flächenhafter Isolator 26 angeordnet sein, der vorzugsweise die Permanentmagnete 1-19 von den Permanentmagneten 2-19 isoliert. Ebenso kann ein Isolator 27 zwischen den Permanentmagneten 2-19 der zweiten Gruppe #2 und den Permanentmagneten 3-19 der dritten Gruppe #3 angeordnet sein.

Mit dieser Anordnung werden in den Permanentmagneten 19 auftretende Wirbelströme vermindert, wodurch die Abhängigkeit der Größe des übertragenen Drehmoments von der Drehzahldifferenz zwischen den beiden Rotoren 11 und 12 vermindert wird. Die Drehmoment-Schlupf-Kennlinie wird dadurch besonders flach. Außerdem kann durch diese Maßnahme die Tendenz zur Ausbildung von Rastmomenten reduziert werden, falls solche auftreten sollten. Es ist möglich, die Anzahl der Permanentmagnete 19 in den drei Gruppen #1, #2 und #3 gleich zu wählen oder unterschiedlich festzulegen. Außerdem muss die Anzahl der Permanentmagnete 19 jeder der drei Gruppen nicht zwangsläufig teilerfremd mit der Anzahl der Polstücke 17 sein, obwohl dies bevorzugt wird. Auch müssen die Polwinkel α, β der beiden Rotoren 11, 12 nicht zwangsläufig teilerfremd sein, obwohl auch dies bevorzugt wird.

Bei der erfindungsgemäßen Hysteresekupplung 10 ist ein erster Rotor 11 mit in Umfangsrichtung paarweise gegensinnig polarisierten Magnete 18 versehen, zwischen denen Polstücke 17 zur Umlenkung des magnetischen Flusses in Radialrichtung vorgesehen sind. Ein zweiter Rotor 12 weist eine Serie sich in Umfangsrichtung erstreckender auf einem zu der Drehachse Ax konzentrischen Kreis angeordneter zweiter Permanentmagnete 19 auf. Die Anzahl der ersten Magnete 18 und die Anzahl der zweiten Magnete 19 ist vorzugsweise so festgelegt, dass ein glatter, rastmomentfreier oder zumindest rastmomentarmer Drehmomentverlauf erreicht wird. Dazu sind die Anzahl M der Permanentmagnete des ersten Rotors und die Anzahl von Permanentmagneten S des zweiten Rotors mit Rücksicht aufeinander und unter Einhaltung bestimmter Bedingungen festgelegt. Die beiden Anzahlen M und S können dazu entsprechend mindestens der nachfolgend genannten Bedingung festgelegt sein: Das Produkt beiden Anzahlen M und S, geteilt durch 180, ist eine ganzzahlige Potenz der Zahl Zwei ($M*S/180=2^N$, [N=0, 1, 2, 3 ...]).

Bezugzeichen:

10 Hysteresekupplung
11 erster Rotor
12 zweiter Rotor
13 erste Welle
14 zweite Welle
15 Luftspalt
16 Nabe
17 Polstücke
18 Permanentmagnete des ersten Rotors
19 Permanentmagnete des zweiten Rotors
20 Lücke
21 Längsschnittfläche
22 B-H-Kennlinie der ersten Permanentmagnete
1823 B-H-Kennlinie der zweiten Permanentmagnete 19
24 Halter
24a Befestigungsöffnungen
25 Stirnplatte
26 Isolator
27 Isolator
Ax Drehachse
M Anzahl der ersten Permanentmagnete 18
S Anzahl der zweiten Permanentmagnete 19

**Patentansprüche**

1. Hysteresekupplung (10) insbesondere zur Übertragung von Rotationsenergie in Maschinen,

   mit einem um eine Drehachse (Ax) drehbaren ersten Rotor (11), der eine Anzahl M Permanentmagnete (18) mit einer ersten Koerzitivfeldstärke ($H_{c1}$) aufweist,
   mit am ersten Rotor (11) angeordneten prismatisch keilförmig ausgebildeten, Polstücken (17), die trapezförmige axial orientierte Stirnflächen aufweisen, wobei die Permanentmagnete (18) des ersten Rotors (11) einen Trapezquerschnitt aufweisen und in im Querschnitt trapezförmigen, zwischen benachbarten Polstücken (17) ausgebildeten Taschen mit einer Schmalseite radial außen und mit einer Breitseite radial innen angeordnet sind,
   mit einem um die Drehachse (Ax) drehbaren zweiten Rotor (12), der eine Anzahl S von in Schlupfrichtung hintereinander angeordneten Permanentmagneten (19) mit einer zweiten Koerzitivfeldstärke ($H_{c2}$) aufweist, die niedriger ist, als die erste Koerzitivfeldstärke ($H_{c1}$), wobei die Anzahl S der Permanentmagnete (19) des zweiten Rotors (12) mindestens gleich zwei ist und das Produkt der Anzahl M mal der Anzahl S, geteilt durch 180, eine Potenz der Zahl Zwei ist, d.h. $M \cdot S / 180 = 2^N$, wobei N eine natürliche Zahl ist [N=0,1,2,3...],
   mit einem zwischen dem ersten Rotor (11) und dem zweiten Rotor (12) ausgebildeten kegelstumpfförmigen oder zylindrischen Luftspalt (15).

2. Hysteresekupplung nach Anspruch 1, **dadurch gekennzeichnet, dass** die Permanentmagnete (18, 19) beider Rotoren (11, 12) aus unterschiedlichen hartmagnetischen Materialien bestehen.

3. Hysteresekupplung einem der vorstehenden Ansprüche, **dadurch gekennzeichnet, dass** die Permanentmagnete (18) des ersten Rotors (11) ein maximales Energieprodukt (B-H)max aufweisen, das größer als 100 kJ/m3, vorzugsweise größer als 200 kJ/m3 ist und/ oder dass die Permanentmagnete (19) des zweiten Rotors (12) ein maximales Energieprodukt (B-H)max aufweist, das größer als 10 kJ/m3, jedoch kleiner als 100 kJ/m3 ist.

4. Hysteresekupplung nach Anspruch einem der vorstehenden Ansprüche, **dadurch gekennzeichnet, dass** die Permanentmagnete (18) des ersten Rotors (11) Seltenerdmagnete sind, bestehend aus wenigstens einem Element aus der Gruppe Eisen, Cobalt und Nickel und außerdem wenigstens einem Seltenerdmetall aus der Gruppe Neodym, Samarium, Praseodym, Dysprosium, Terbium, Gadolinium und Yttrium, vorzugsweise gebildet durch eine Neodym-Eisen-Bor-Legierung, insbesondere Nd2Fe14B.

5. Hysteresekupplung nach einem der vorstehenden Ansprüche, **dadurch gekennzeichnet, dass** die Permanentmagnete (18) des ersten Rotors (11) eine magnetische Anisotropie aufweisen, die eine Vorzugsrichtung für die Magnetisierung der Permanentmagnete (18) festlegt, wobei die Vorzugsrichtung in Umfangsrichtung zu der Drehachse (Ax) des ersten Rotors (11) orientiert ist.

6. Hysteresekupplung nach Anspruch einem der vorstehenden Ansprüche, **dadurch gekennzeichnet, dass** die Permanentmagnete (18) des ersten Rotors (11) in Umfangsrichtung polarisiert sind, wobei benachbarte Permanentmagnete (18) jeweils gegensinnig polarisiert sind.

7. Hysteresekupplung nach einem der vorstehenden Ansprüche, **dadurch gekennzeichnet, dass** die Anzahl M der Permanentmagnete (18) des ersten Rotors (11) und die Anzahl S der Permanentmagnete (19) des zweiten Rotors (12) zusätzlich zueinander teilerfremd sind.

8. Hysteresekupplung nach einem der vorstehenden Ansprüche, **dadurch gekennzeichnet, dass** die Permanentmagnete (18) des ersten Rotors (11) eine Koerzitivfeldstärke (HC1) aufweisen, die größer als 200 kA/m, vorzugsweise größer als 1000 kA/m ist.

9. Hysteresekupplung nach einem der vorstehenden Ansprüche, **dadurch gekennzeichnet, dass** die Permanentmagnete (19) des zweiten Rotors (12) Al-NiCo-Magnet sind.

10. Hysteresekupplung nach Anspruch 9, **dadurch gekennzeichnet, dass** die Permanentmagnete (19) des zweiten Rotors (12) zylinderschalenförmig mit jeweils einer Schaleninnenseite ausgebildet sind, die den Luftspalt (15) radial nach außen begrenzt.

11. Hysteresekupplung nach Anspruch 10, **dadurch gekennzeichnet, dass** die radiale Dicke (r) der Permanentmagnete (19) des zweiten Rotors (12) so bemessen ist, dass auf Grund eines von den Dauermagneten (18) des ersten Rotors (11) hervorgerufenen magnetischer Flusses φ auf einer Längsschnittfläche (21) jedes Permanentmagneten (19) des zweiten Rotors (12) in mindestens einem Punkt dessen Sättigungsinduktion Bsat erreicht wird.

12. Hysteresekupplung nach einem der Ansprüche 8 bis 11, **dadurch gekennzeichnet, dass** jeder Permanentmagnet (19) des zweiten Rotors (12) wenigstens zwei zwischen einander benachbarten Permanentmagnete (18) des ersten Rotors (11) angeordnete Polstücke (17) überspannt.

13. Hysteresekupplung nach einem der vorstehenden Ansprüche, **dadurch gekennzeichnet, dass** die Permanentmagnete (19) des zweiten Rotors (12) in einem geblechten Halter (24) gefasst ist.

**Claims**

1. Hysteresis clutch (10), particularly for transmitting of rotational energy in machines,

   having a first rotor (11) rotatable about a rotation axis (Ax) and comprising a number M of permanent magnets (18) with a first coercive field strength ($H_{C1}$),
   having prismatic wedge-shaped pole pieces (17) arranged on the first rotor (11), which have trapezoidal axially oriented end faces, wherein the permanent magnets (18) of the first rotor (11) have a trapezoidal cross-section and are arranged in pockets having a trapezoidal cross-section, being formed between adjacent pole pieces (17), and having a narrow side radially on the outside and a broad side radially on the inside,
   having a second rotor (12) rotatable about the rotation axis (Ax) comprising a number S of permanent magnets (19) with a second coercive field strength ($H_{C2}$) which is lower than the first coercive field strength ($H_{C1}$), wherein the number S of the permanent magnets (19) of the second rotor (12) is at least two and the product of the number M times the number S divided by 180 is a power of the number two, i.e.: $M*S/180=2^N$, wherein N is a natural number [N=0, 1, 2, 3 ...],
   having a truncated cone-shaped or cylindrical air gap (15) formed between the first rotor (11) and the second rotor (12).

2. Hysteresis clutch according to claim 1, **characterized in that** the permanent magnets (18, 19) of both rotors (11, 12) consist of different hard-magnetic materials.

3. Hysteresis clutch according to one of the preceding claims, **characterized in that** the permanent magnets (18) of the first rotor (11) have a maximum energy product $(B-H)_{max}$ that is larger than 100 kJ/m$^3$, preferably larger than 200 kJ/m$^3$ and/or that the permanent magnets (19) of the second rotor (12) have a maximum energy product $(B-H)_{max}$ that is larger than 10 kJ/m$^3$, but is smaller than 100 kJ/m$^3$.

4. Hysteresis clutch according to any of the preceding claims, **characterized in that** the permanent magnets (18) of the first rotor (11) are rare earth magnets consisting of at least one element of the group iron, cobalt and nickel and in addition at least one rare earth metal of the group neodymium, samarium, praseodymium, dysprosium, terbium, gadolinium and yttrium, preferably formed by a neodymium-iron-boron-alloy, particularly $Nd_2Fe_{14}B$.

5. Hysteresis clutch according to any of the preceding claims, **characterized in that** the permanent magnets (18) of the first rotor (11) have a magnetic anisotropy that defines a predominant direction for the magnetization of the permanent magnets (18), wherein the predominant direction is orientated in circumferential direction with regard to the rotation axis (Ax) of the first rotor (11).

6. Hysteresis clutch according to any of the preceding claims, **characterized in that** the permanent magnets (18) of the first rotor (11) are polarized in circumferential direction, wherein adjacent permanent magnets (18) are polarized in the opposite sense respectively.

7. Hysteresis clutch according to any of the preceding claims, **characterized in that** the number M of the permanent magnets (18) of the first rotor (11) and the number S of the permanent magnets (19) of the second rotor (12) are furthermore co-prime with regard to each other.

8. Hysteresis clutch according to any of the preceding claims, **characterized in that** the permanent magnets (18) of the first rotor (11) have a coercive field strength ($H_{C1}$) that is larger than 200 kA/m, preferably larger than 1000 kA/m.

9. Hysteresis clutch according to any of the preceding claims, **characterized in that** the permanent magnets (19) of the second rotor (12) are AlNiCo-magnets.

10. Hysteresis clutch according to claim 9, **characterized in that** the permanent magnets (19) of the second rotor (12) are formed in cylinder-dish-shaped manner with a dish inner side in each case that limits the air gap (15) radially outward.

11. Hysteresis clutch according to claim 10, **characterized in that** radial thickness (r) of the second magnets (19) of the second rotor (12) is dimensioned such that, due to a magnetic flux $\varphi$ created by the permanent magnets (18) of the first rotor (11) in at least one point on a longitudinal sectional plane (21) of each permanent magnet (19) of the second rotor (12), its saturation flux density $B_{sat}$ is achieved.

12. Hysteresis clutch according to any of the claims 8 to 11, **characterized in that** each permanent magnet (19) of the second rotor (12) spans over at least two pole pieces (17) arranged between permanent magnets (18) of the first rotor (11) that are adjacent to each other.

13. Hysteresis clutch according to any of the preceding claims, **characterized in that** the permanent magnets (19) of the second rotor (12) are held in a laminated holder (24).


**Revendications**

1. Couplage à hystérésis (10), destiné en particulier à la transmission d'énergie de rotation dans des machines,

   comprenant un premier rotor (11) qui peut être mis en rotation autour d'un axe de rotation (Ax) et présente un nombre M d'aimants permanents (18) avec une première intensité de champ coercitif ($H_{c1}$),
   comprenant des pièces polaires (17) réalisées sous une forme prismatique en coin, qui sont disposées sur le premier rotor (11) et présentent des faces frontales en forme de trapèze orientées axialement, les aimants permanents (18) du premier rotor (11) présentant une section transversale trapézoïdale et étant disposés dans des alvéoles ayant une section transversale trapézoïdale et formées entre des pièces polaires (17) adjacentes, avec une petite base radialement vers l'extérieur et avec une grande base radialement vers l'intérieur,
   comprenant un deuxième rotor (12) qui peut être mis en rotation autour de l'axe de rotation (Ax) et présente un nombre S d'aimants permanents (19), disposés les uns derrière les autres dans le sens du patinage, avec une deuxième intensité de champ coercitif ($H_{c2}$) qui est inférieure à la première intensité de champ coercitif ($H_{c1}$), le nombre S d'aimants permanents (19) du deuxième rotor (12) étant au moins égal à deux, et le produit du nombre M fois le nombre S, divisé par 180, étant une puissance du nombre deux, c'est-à-dire $M*S/180=2^N$, où N est un nombre naturel (N = 0, 1, 2, 3 ...),
   comprenant un entrefer (15) en tronconique ou cylindrique, formé entre le premier rotor (11) et le deuxième rotor (12).

2. Couplage à hystérésis selon la revendication 1, **caractérisé en ce que** les aimants permanents (18, 19) des deux rotors (11, 12) sont constitués de matériaux magnétiques durs différents.

3. Couplage à hystérésis l'une des revendications précédentes, **caractérisé en ce que** les aimants permanents (18) du premier rotor (11) présentent un produit énergétique maximal (B-H) max qui est supérieur à 100 kJ/m3, de préférence supérieur à 200 kJ/m3 et/ou **en ce que** les aimants permanents (19) du deuxième rotor (12) présente un produit énergétique maximal (B-H) max qui est supérieur à 10 kJ/m3 mais inférieur à 100 kJ/m3.

4. Couplage à hystérésis selon revendication l'une des revendications précédentes, **caractérisé en ce que** les aimants permanents (18) du premier rotor (11) sont des aimants à base de terres rares, constitués d'au moins un élément du groupe fer, cobalt et nickel, et en outre d'au moins un métal rare du groupe néodyme, samarium, praséodyme, dysprosium, terbium, gadolinium et yttrium, constitués de préférence d'un alliage néodyme-fer-bore, en particulier Nd2Fe14B.

5. Couplage à hystérésis selon l'une des revendications précédentes, **caractérisé en ce que** les aimants permanents (18) du premier rotor (11) présentent une anisotropie magnétique qui définit une direction préférentielle pour l'aimantation des aimants permanents (18), la direction préférentielle étant orientée dans la direction périphérique par rapport à l'axe de rotation (Ax) du premier rotor (11).

6. Couplage à hystérésis selon revendication l'une des revendications précédentes, **caractérisé en ce que** les aimants permanents (18) du premier rotor (11) sont polarisés dans la direction périphérique, des aimants permanents (18) voisins étant respectivement polarisés dans des sens opposés.

7. Couplage à hystérésis selon l'une des revendications précédentes, **caractérisé en ce que** le nombre M des aimants permanents (18) du premier rotor (11) et le nombre S des aimants permanents (19) du deuxième rotor (12) n'ont en outre pas de diviseurs communs entre eux.

8. Couplage à hystérésis selon l'une des revendications précédentes, **caractérisé en ce que** les aimants permanents (18) du premier rotor (11) présentent une intensité de champ coercitif (HC1) qui est supérieure à 200 kA/m, de préférence supérieure à 1 000 kA/m.

9. Couplage à hystérésis selon l'une des revendications précédentes, **caractérisé en ce que** les aimants permanents (19) du deuxième rotor (12) sont des aimants AlNiCo.

10. Couplage à hystérésis selon la revendication 9, **caractérisé en ce que** les aimants permanents (19) du deuxième rotor (12) sont réalisés en forme de coques cylindriques comportant respectivement une face interne de coque, qui délimite l'entrefer (15) radialement vis-à-vis de l'extérieur.

11. Couplage à hystérésis selon la revendication 10, **caractérisé en ce que** l'épaisseur radiale (r) des aimants permanents (19) du deuxième rotor (12) est prévue telle qu'en raison d'un flux magnétique $\varphi$ engendré par les aimants permanents (18) du premier rotor (11), l'induction de saturation Bsat de chaque aimant permanent (19) du deuxième rotor (12) soit atteinte en au moins un point sur une surface de coupe longitudinale (21) de chaque aimant.

12. Couplage à hystérésis selon l'une des revendications 8 à 11, **caractérisé en ce que** chaque aimant permanent (19) du deuxième rotor (12) couvre au moins deux pièces polaires (17) disposées entre des aimants permanents (18) mutuellement voisins du premier rotor (11).

13. Couplage à hystérésis selon l'une des revendications précédentes, **caractérisé en ce que** les aimants permanents (19) du deuxième rotor (12) sont sertis dans un support (24) pourvu de tôle.

Fig.1

Fig.2

Fig.3

Fig.4

12

19

19a | 19b | 19c | 19d

**Fig.5**

12

26

19

#1 | 1-19a | 1-19b | 1-19c | 1-19d
#2 | 2-19a | 2-19b | 2-19c
#3 | 3-19a | 3-19b | 3-19c

27

**Fig.6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3573518 A
- US 4876471 A
- DE 202008003913 U1
- DE 102014101655 A1
- US 20130113317 A1
- DE 102009039658 A1
- EP 2395635 A1
- CN 102611280 B
- WO 2013138971 A1